# DEMANDE DE BREVET EUROPEEN

(11) **EP 1 930 230 A1**
(43) Date de publication de la demande: **11.06.2008**
(21) Numéro de dépôt: 07301587.7
(22) Date de dépôt: 26.11.2007
(51) Int. Cl.: B62D 21/15, B62D 25/08

(54) **Véhicule à cassette de refroidissement équipée d'au moins un élément d'absorption de choc frontal**

(30) Priorité: 06.12.2006 FR 0655350
(71) Demandeur: Peugeot Citroen Automobiles SA, 78140 Vélizy Villacoublay (FR)
(72) Inventeur: Coulombier, Donat, 78280 Guyancourt (FR); Leclere, Guillaume, 91300 Massy (FR); Tarisca, Bernard Résidence D. Casanova, 93700 Drancy (FR)
(74) Mandataire: Allain, Laurent

(57) **Abrégé**

La présente invention concerne un véhicule utilitaire à cassette de refroidissement équipée d'au moins un élément d'absorption de choc frontal.

Le véhicule est caractérisé en ce que la cassette (3) est pourvue d'un élément d'absorption de choc frontal (7) s'étendant vers l'arrière du véhicule dans un espace libre entre la cassette (3) et une partie du groupe motopropulseur du véhicule et ayant une extrémité libre (7b) disposée avec jeu en regard de la partie du groupe motopropulseur.

L'invention trouve application dans le domaine de l'automobile.

## Description

La présente invention concerne le domaine de la sécurité passive de véhicules utilitaires ou particuliers pouvant subir des chocs frontaux appliqués en particulier à la cassette de refroidissement équipant chaque véhicule utilitaire.

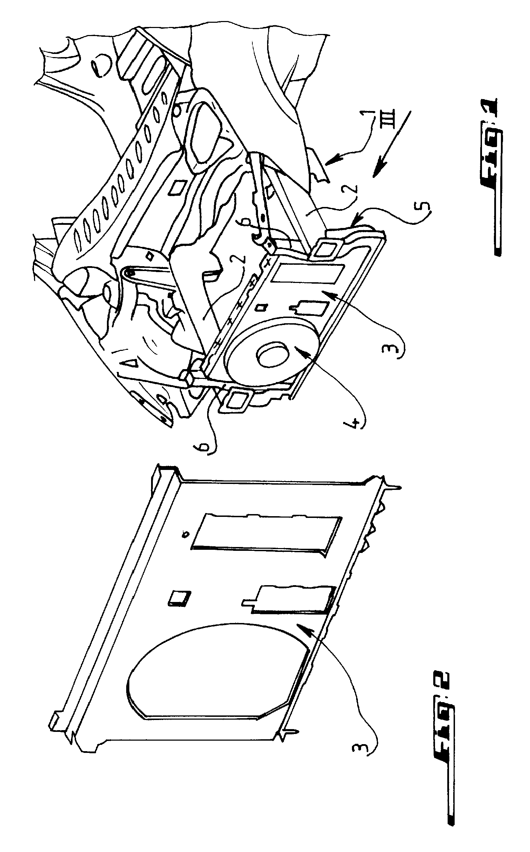

La figure 1 représente la partie avant d'un châssis 1 d'un véhicule automobile destinée à porter le groupe motopropulseur, non représenté, de ce véhicule et comportant notamment deux longerons 2 disposés sur les côtés droit et gauche du véhicule symétriquement par rapport à un plan médian longitudinal du véhicule.

Une cassette de refroidissement 3, mieux visible en figure 2, portant le groupe motoventilateur 4 et pouvant être réalisée en une matière plastique ou à base d'un matériau composite, est fixée verticalement aux extrémités avant des deux longerons 2.

La cassette de refroidissement 3 peut être logée et fixée dans un cadre rigide 5 de forme générale rectangulaire dont les deux côtés ou piliers sensiblement verticaux 6 sont fixés, par exemple par soudage, aux extrémités avant des deux longerons 2.

Certains véhicules automobiles ont leur châssis équipé de prolonges de berceau.

Lorsqu'un choc frontal est appliqué à la façade avant du véhicule constituée par l'ensemble à cassette de refroidissement 3 portant le groupe motoventilateur 4 et cadre de support 6, l'impact du choc est transmis aux longerons 2 et aux prolonges de berceau qui se déforment longitudinalement pour absorber l'énergie du choc.

Si l'utilisation de prolonges de berceau donne entière satisfaction pour absorber l'énergie d'un choc frontal appliqué au véhicule, elle est néanmoins relativement coûteuse et alourdit la partie avant du châssis du véhicule.

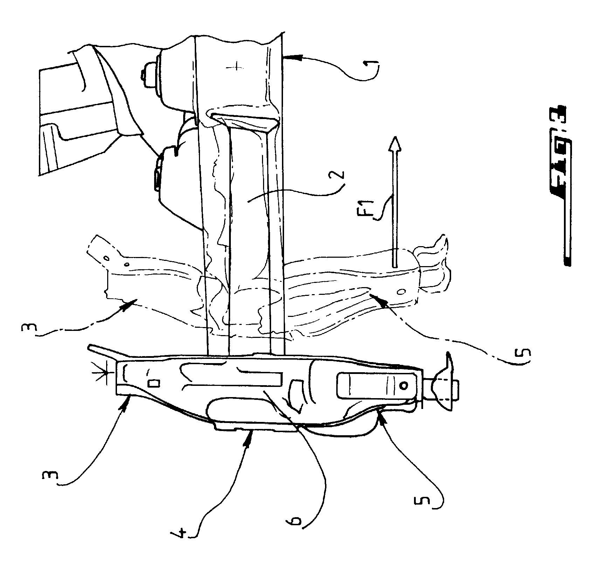

La figure 3 représente une vue de côté de la partie avant du châssis 1 du véhicule ne comportant pas de prolonges de berceau, la façade avant à cassette de refroidissement 3, groupe motoventilateur 4 et cadre rigide 5, étant représentée en trait fort à une position normale d'utilisation.

En cas de choc frontal appliqué à la façade avant du véhicule, la partie inférieure de celle-ci subit un recul ou déversement F1 en tout début du choc vers l'arrière du véhicule comme symbolisé en traits mixtes en l'absence de toute connexion dans la zone inférieure du châssis avec le reste de la structure de celui-ci, entraînant la détérioration de la cassette et du cadre de support. Le déversement du bas de la façade avant peut aussi engendrer un déversement ou une déstabilisation des longerons.

Un but de l'invention est de fournir une solution permettant d'empêcher le déversement de la cassette de refroidissement, de stabiliser le comportement des longerons et, le cas échéant, de son cadre de support de la façade avant du véhicule lors d'un choc frontal.

A cet effet, selon l'invention, le véhicule comprenant un châssis à deux longerons avant, un groupe motopropulseur porté par le châssis, et une cassette de refroidissement portant un groupe motoventilateur fixée aux extrémités des deux longerons perpendiculairement à ceux-ci, est caractérisé en ce que la cassette est pourvue d'au moins un élément d'absorption de choc frontal que peut subir la cassette de refroidissement, s'étendant vers l'arrière du véhicule dans un espace libre entre la cassette et une partie du groupe motopropulseur et ayant une extrémité libre arrière disposée avec jeu en regard de la partie du groupe motopropulseur de manière qu'en début du choc frontal l'élément d'absorption de choc vienne en appui sur la partie du groupe motopropulseur pour stopper le recul de la cassette de refroidissement et que cet élément se comprime ensuite longitudinalement avec les deux longerons lors de la poursuite du choc pour permettre à la cassette de refroidissement de reculer.

De préférence, l'élément d'absorption de choc est situé en partie inférieure de la cassette de refroidissement.

Selon un mode de réalisation, l'élément d'absorption de choc est en forme de barreau compressible s'étendant longitudinalement au véhicule.

Avantageusement, l'extrémité arrière de l'élément d'absorption de choc comporte une face d'extrémité plane destinée à venir en appui sur une face plane de la partie du groupe motopropulseur lors du choc frontal.

Un doigt ou pion anti-glissement peut être prévu à la face d'appui de la partie du groupe motopropulseur pour s'engager dans une ouverture conjuguée prévue dans l'extrémité arrière de l'élément d'absorption de choc lors d'un choc frontal.

La face plane d'extrémité de l'élément d'absorption de choc est sensiblement verticale.

La cassette est logée dans un cadre rigide de support de forme générale rectangulaire dont les côtés sensiblement verticaux sont fixés respectivement aux deux longerons et l'élément d'absorption de choc est fixé au côté horizontal inférieur du cadre de support et au centre de ce côté.

L'élément d'absorption de choc peut être en métal, tel que de l'acier ou de l'aluminium, ou en une matière plastique pouvant venir du moulage avec le cadre de support.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue en perspective d'une partie avant d'un châssis de véhicule automobile pourvue d'une façade avant conforme à l'art antérieur ;
- la figure 2 est une vue en perspective de la cassette de refroidissement de la façade avant de la figure 1 ;
- la figure 3 est une vue de côté suivant la flèche III de la figure 1 et représentant la façade avant, avant et après un choc frontal appliqué à celle-ci ;
- la figure 4 est une vue en perspective d'une partie avant d'un châssis de véhicule automobile montrant un cadre de support d'une cassette de refroidissement équipé d'un élément d'absorption de choc conforme en l'invention ;
- la figure 5 est une vue en coupe suivant la ligne V-V de la figure 4 ;
- la figure 6 est une vue de dessus en perspective agrandie semblable à celle de la figure 4 et représentant le positionnement du groupe motopropulseur du véhicule relativement à l'élément d'absorption de choc de l'invention ;
- la figure 7 est une vue semblable à celle de la figure 6 avant qu'un choc soit appliqué au cadre de support de la cassette de refroidissement ;
- la figure 8 correspond à celle de la figure 7 montrant le rattrapage de jeu entre l'élément d'absorption de choc et une partie du groupe motopropulseur au tout début de l'application du choc frontal ;
- la figure 9 montre l'action antidéversement de l'élément d'absorption de choc de la partie inférieure du cadre au début du choc frontal ; et
- la figure 10 représente l'élément d'absorption de choc et le cadre de support de la cassette de refroidissement en fin de choc frontal.

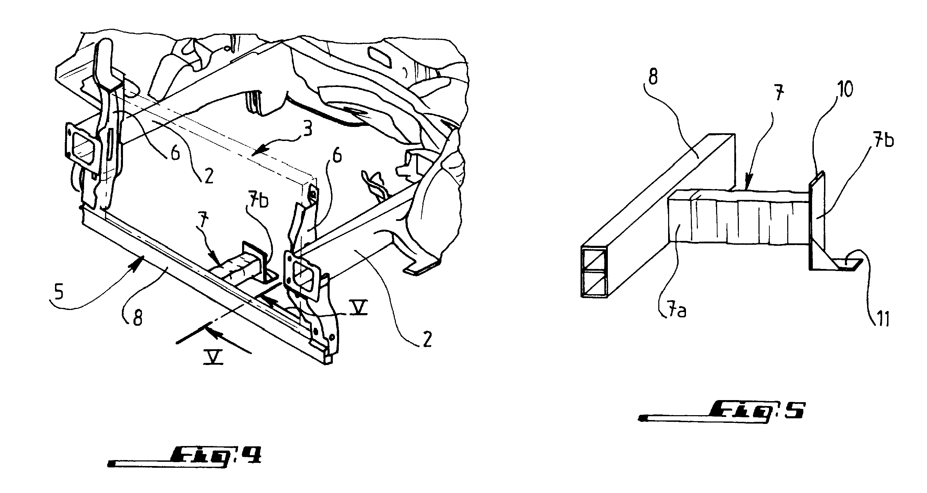

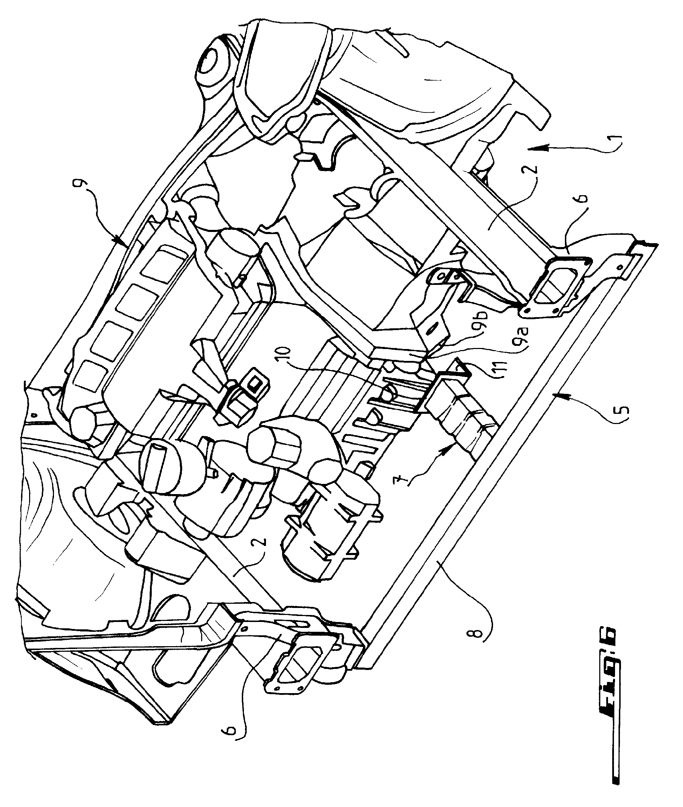

Les éléments ou composants de la partie avant de châssis d'un véhicule automobile représentée aux figures 4 à 10 identiques ou correspondant à ceux de la partie avant du châssis du véhicule des figures 1 à 3 portent les mêmes références et ne seront pas à nouveau détaillés.

Le cadre 5 destiné à recevoir et supporter la cassette de refroidissement 3 représentée en traits mixtes, présente la même forme générale rectangulaire du cadre de l'art antérieur et ne comporte pas dans le cas présent de côté longitudinal supérieur s'étendant transversalement au véhicule, mais il est bien entendu qu'un tel côté ou traverse peut être présent pour maintenir la cassette de refroidissement.

Selon l'invention telle que représentée aux figures 4 à 10, le cadre rigide 5 comprend un élément d'absorption de choc 7 solidaire du côté inférieur longitudinal et horizontal 8 du cadre 5 et s'étendant en direction longitudinale du véhicule parallèlement aux deux longerons 2 en étant disposé dans un espace libre entre la cassette 3 et une partie du groupe motopropulseur.

L'élément d'absorption de choc 7 est ainsi fixé par l'une de ses extrémités 7a au côté ou traverse inférieure 8 du cadre 5 perpendiculairement à celui-ci en faisant saillie vers l'arrière du véhicule et à son extrémité libre opposée se terminant par une face plane 7b pouvant venir en appui, lors d'un choc frontal, sur une face d'appui correspondante 9a du groupe motopropulseur 9 du véhicule portée par la partie avant de châssis de celui-ci, la face d'appui 9a pouvant appartenir au carter d'huile du groupe motopropulseur 9.

La face plane d'extrémité arrière 7b de l'élément d'absorption de choc 7, occupant de préférence une position sensiblement verticale, est normalement située à une certaine distance ou jeu déterminé relativement à la face d'appui 9a du groupe motopropulseur 9 et, de préférence, cette distance est supérieure aux débattements du moteur pour éviter normalement tout contact entre le groupe motopropulseur 9 et l'extrémité arrière de l'élément d'absorption de choc 7.

Dans l'exemple représenté, la face d'appui arrière 7b de l'élément 7 appartient à une plaque rigide 10 solidaire de l'extrémité de l'élément 7 perpendiculairement à celui-ci. L'élément 7 peut également comporter une seconde plaque inférieure 11 s'étendant perpendiculairement à la plaque 10 ou étant inclinée vers le bas relativement à celle-ci de manière à pouvoir venir en appui, lors d'un choc frontal, sur une face d'appui correspondante 9b du groupe motopropulseur 9 et située en dessous de la face d'appui 9a. Un doigt ou pion anti-glissement peut être prévu à la face d'appui de la partie du groupe motopropulseur pour s'engager dans une ouverture conjuguée prévue dans l'extrémité arrière de l'élément d'absorption de choc 7 lors d'un choc frontal pour éviter tout phénomène d'échappement de l'extrémité arrière de l'élément d'absorption de choc 7 relativement à la face d'appui du groupe motopropulseur.

Comme représenté, l'élément 7 est constitué par un barreau parallélépipédique compressible suivant sa direction longitudinale et fixé au centre du côté horizontal inférieur 8 du cadre 5 en étant situé dans le plan médian de ce cadre perpendiculaire à celui-ci.

Le cadre rigide 5 peut être métallique avec ses deux côtés ou piliers verticaux 6 obtenus de manière classique par soudage de différentes pièces en tôle préalablement formées et son côté inférieur horizontal 8 formant traverse peut être réalisé par un profilé en aluminium de section ouverte ou de section fermée de type carré ou en huit.

Le cadre 5 peut être réalisé en une matière plastique rigide.

L'élément d'absorption de choc 7 peut être fixé par soudage, vissage, voire même par collage à la traverse 8. Lorsque le cadre 5 est réalisé en une matière plastique, l'élément d'absorption de choc 7 peut être obtenu par moulage avec ce cadre.

Ainsi, les matériaux utilisés pour l'élément d'absorption de choc 7 et qui dépendent du niveau d'effort recherché lors du choc frontal, peuvent être métalliques, tels que de l'acier ou de l'aluminium, mais également des matériaux plastiques. Lorsque l'élément 7 est réalisé en une matière plastique, cet élément peut être conformé en forme de boîte parallélépipédique nervurée pouvant se comprimer longitudinalement lors d'un choc frontal.

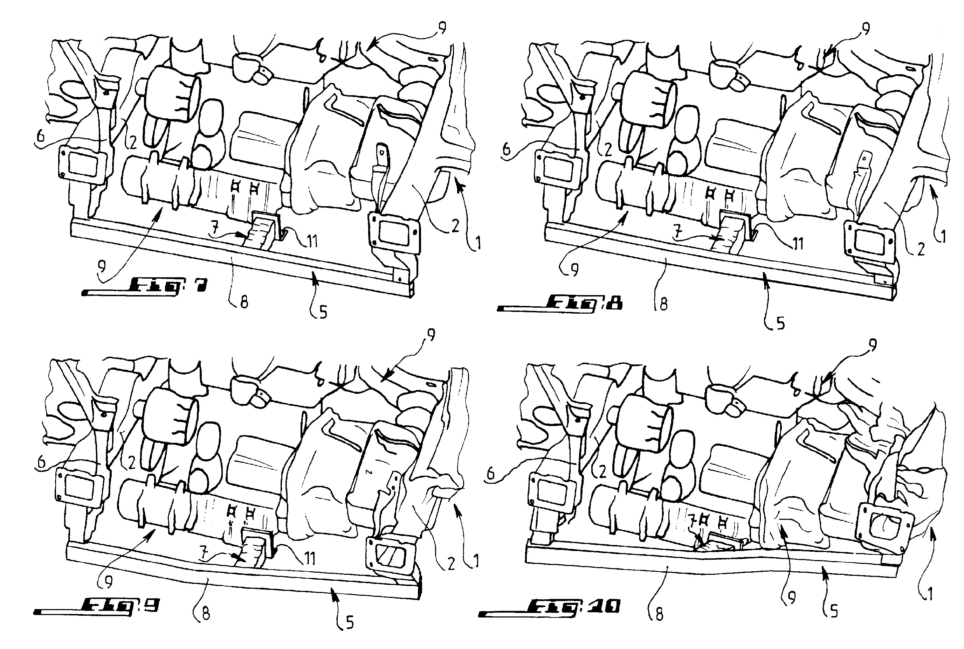

En tout début d'un choc frontal appliqué à la façade avant comprenant le cadre 5, la cassette de refroidissement 2 et le groupe motoventilateur 4, le cadre 5 commence à légèrement reculer ou se déverser vers l'arrière du véhicule comme représenté en figure 8 jusqu'à ce que la face d'appui arrière 7b de l'élément 7 vienne en appui sur la face d'appui conjuguée 9a du groupe motopropulseur 9 comme représenté en figure 9. A ce stade, le déversement de la façade avant est stoppé et l'élément 7 transmet les efforts dus à l'impact du choc sans se comprimer longitudinalement. En outre, les faces d'appui 7b et 9a entre l'élément 7 et groupe motopropulseur 9 sont relativement importantes et assurent une bonne stabilité d'appui.

Lors de la poursuite du choc frontal, les efforts transmis à la face avant augmentent et les deux longerons 2 commencent à se déformer longitudinalement par compression, provoquant également une déformation par compression longitudinale de l'élément 7 pour absorber l'énergie de choc et permettre au cadre 5 de la façade avant de reculer de manière équilibrée en parties haute et basse comme représenté en figure 10.

Diverses modifications peuvent être apportées sans sortir du cadre de la présente invention.

Ainsi, dans le cas d'une façade avant ne comportant pas de cadre rigide de support d'une cassette de refroidissement qui est alors elle-même rigidifiée en adoptant des matériaux plastiques extrêmement résistants, tels que par exemple des matériaux composites ou en recourant à des inserts métalliques dans la cassette en matière plastique, l'élément d'absorption de choc peut être solidaire directement de la cassette lors du moulage de celle-ci.

L'implantation de l'élément d'absorption du choc en partie centrale de la traverse inférieure 8 du cadre 5 assure une fonction efficace d'antidéversement du cadre de support de la cassette de refroidissement indépendamment du lieu d'impact du choc à ce cadre, mais une implantation décentrée de cet élément est tout à fait envisageable. Par ailleurs, il est également possible d'implanter plusieurs éléments d'absorption de choc en différents emplacements du cadre rigide 5, aussi bien sur la traverse inférieure ou supérieure, si présente, que sur les piliers verticaux 6 de ce cadre.

L'invention permet ainsi de limiter efficacement le déversement de la partie inférieure d'une façade avant d'un véhicule automobile grâce à l'utilisation d'un appui supplémentaire formé par l'élément d'absorption de choc qui augmente la capacité d'absorption d'énergie de choc de cette façade lors de la poursuite du choc lorsque la façade recule contre le groupe motopropulseur du véhicule. A ce stade, les faces 7b et 9a en appui l'une contre l'autre de l'élément d'absorption de choc 7 du groupe motopropulseur 9, du fait de leur stabilité, assurent une bonne compression de l'élément 7. Enfin, du fait que l'invention permet de supprimer les prolonges de berceau, les coûts du véhicule sont réduits et la masse du véhicule est diminuée.

## Revendications

1. Véhicule comprenant un châssis (1) à deux longerons avant (2), un groupe motopropulseur (9) porté par le châssis (1), et une cassette de refroidissement (3) portant un groupe motoventilateur (4) fixée aux extrémités des deux longerons (2) perpendiculairement à ceux-ci, **caractérisé en ce qu'**à la cassette de refroidissement (3) est associé au moins un élément (7) d'absorption de choc frontal que peut subir la cassette de refroidissement (3), s'étendant vers l'arrière du véhicule dans un espace libre entre la cassette (3) et une partie du groupe motopropulseur (9) et ayant une extrémité libre arrière (7b) disposée avec jeu en regard de la partie du groupe motopropulseur (9) de manière qu'en début du choc frontal l'élément d'absorption de choc (7) vienne en appui sur la partie du groupe motopropulseur (9) pour stopper le recul de la cassette de refroidissement (3) et que cet élément (7) se comprime ensuite longitudinalement avec les deux longerons (2) lors de la poursuite du choc pour permettre à la cassette de refroidissement (3) de reculer.

2. Véhicule selon la revendication 1, **caractérisé en ce que** l'élément d'absorption de choc (7) est situé en partie inférieure de la cassette de refroidissement (3).

3. Véhicule selon la revendication 1 ou 2, **caractérisé en ce que** l'élément d'absorption de choc (7) est en forme de barreau compressible s'étendant longitudinalement au véhicule.

4. Véhicule selon l'une des revendications précédentes, **caractérisé en ce que** l'extrémité arrière de l'élément d'absorption de choc (7) comporte une face d'extrémité plane (7b) destinée à venir en appui sur une face plane (9a) de la partie du groupe motopropulseur (9) lors du choc frontal.

5. Véhicule selon la revendication 4, **caractérisé en ce que** la face plane d'extrémité (7b) de l'élément d'absorption de choc (7) est sensiblement verticale.

6. Véhicule selon l'une des revendications précédentes, **caractérisé en ce que** la cassette (3) est logée dans un cadre rigide de support (5) de forme générale rectangulaire dont les côtés sensiblement verticaux (6) sont fixés respectivement aux deux longerons (2) et **en ce que** l'élément d'absorption de choc (7) est fixé au côté horizontal inférieur (8) du cadre de support (5) et au centre de ce côté.

7. Véhicule selon la revendication 6, **caractérisé en ce que** l'élément d'absorption de choc (7) est en métal, tel que de l'acier ou de l'aluminium, ou en une matière plastique pouvant venir de moulage avec le cadre de support (5).

8. Véhicule selon l'une des revendications précédentes, **caractérisé en ce qu'**un doigt ou pion anti-glissement est prévu à la face d'appui de la partie du groupe motopropulseur pour s'engager dans une ouverture conjuguée prévue dans l'extrémité arrière de l'élément d'absorption de choc (7) lors d'un choc frontal.
